(19) **Europäisches Patentamt / European Patent Office / Office européen des brevets**

(11) **EP 1 265 078 B1**

(12) **EUROPEAN PATENT SPECIFICATION**

(45) Date of publication and mention
of the grant of the patent:
**08.07.2009 Bulletin 2009/28**

(51) Int Cl.:
***G01S 13/93*** *(2006.01)*    ***G01C 21/00*** *(2006.01)*

(21) Application number: **02253269.1**

(22) Date of filing: **09.05.2002**

(54) **Improvements in or relating to obstacle advisory systems and methods**

Verbesserungen in Hindernis-Warnanzeige-Systemen und -Verfahren

Perfectionnements par rapport aux systèmes et procédés de renseignements d'avertissements d'obstacles

(84) Designated Contracting States:
**AT BE CH CY DE DK ES FI FR GB GR IE IT LI LU MC NL PT SE TR**

(30) Priority: **06.06.2001 IT TO20010546**

(43) Date of publication of application:
**11.12.2002 Bulletin 2002/50**

(73) Proprietor: **Selex Communications S.P.A.**
**16151 Genova (IT)**

(72) Inventor: **Cottalasso, Maurizio**
**Genova (IT)**

(74) Representative: **Deambrogi, Edgardo**
**Jacobacci & Partners S.p.A.**
**Corso Emilia, 8**
**10152 Torino (IT)**

(56) References cited:
**EP-A- 1 065 470**      **US-A- 4 751 658**
**US-A- 5 375 059**      **US-A- 5 740 047**

**Description**

The present invention relates to an obstacle advisory system for a vehicle and to a method of detecting obstacles.

US-A-5 740 047 to Pilley et al. discloses a system and a method for the control of surface and airborne traffic within a defined space envelope, wherein satellite positioning data are used to define and create a 3-dimensional map, define locations and compute trajectories of aircrafts, and define spaces or volumes including zones identified as forbidden zones, such as zones defined around obstacles which may pose a hazard to aircraft navigation. The system is used, for example, by air traffic control, to control and manage the flow of traffic approaching and departing the airport and the control of the flow of surface vehicles and taxiing aircraft.

US-A-5 375 059 disclose systems and methods for the accurate determination of the terrestrial position of an autonomous vehicle in real time, based on combining and filtering a first position estimate of the vehicle derived from satellites of a global positioning system with a second position estimate derived from an inertial reference unit and/or a vehicle odometer so as to derive a more accurate third position estimate of the vehicle's position. A navigation function includes an obstacle handling (detection and avoidance) capability based on a scanning system capable of detecting obstacles in the vehicle's projected trajectory, as well as obstacles which may be approaching from the sides. The navigating function is also arranged to then decide if action is required to avoid the obstacle, how to avoid it and how to get the vehicle back onto a path towards its destination.

An obstacle detection system needs to provide a vehicle operator with only essential information as to obstacles likely to collide with the vehicle. It is known for scanner type systems to detect the position of every potential obstacle in the environment relative to the vehicle. However, as the number of obstacles can be great, it is difficult for the vehicle operator to observe and track all potential obstacles in the vicinity of the vehicle, especially if the vehicle is an aircraft such as a helicopter. For this reason, it is desirable that a obstacle detection system be able to discriminate the more dangerous obstacles and be able to display the information relative to the vehicle.

It is an object of the present invention to obviate or mitigate the disadvantages associated with the prior art.

According to a first aspect of the present invention an obstacle advisory system for a vehicle comprises means to determine the likely trajectory of the vehicle, means to determine possible waypoints along the likely trajectory of the vehicle at predetermined intervals between possible waypoints, means to determine whether or not a predetermined zone around a possible waypoint includes an obstacle, means, for subdividing the predetermined zone into reduced zones which are intersected by the likely trajectory, should the predetermined zone include an obstacle, means to determine for each reduced zone whether or not that reduced zone includes an obstacle, and means to select each reduced zone which includes an obstacle for further subdivision and further selection until the reduced zones become a predetermined minimum size.

In this manner, only those zones which initially include an obstacle are further examined by dividing the zone and again determining for each divided zone whether or not the reduced zone still includes an obstacle. Those zones that do not include an obstacle are no longer considered candidates for further division and selection. Accordingly, processing time for the system is reduced by focusing on only those zones that include an obstacle.

Since the computation of possible obstacles to the vehicle along its likely trajectory needs to be repeated periodically, for example once a second, for all waypoints along the likely trajectory then the amount of processing time will normally increase. For example, if the number of obstacles are approximately fifty and the number of waypoints are about two thousand, then a total of one hundred thousand calculations needs to be performed by the system every second. Accordingly, the inventor has realized that a system which concentrates analysis on locations where a likely trajectory passes near to an obstacle will reduce the overall processing time.

It should be understood that an object may be either wholly included in the zone of interest or may be partially included in the zone of interest. Accordingly, terms such as "include an obstacle" or "includes an obstacle" should be read in the light that the obstacle may either be partially or fully within the zone of interest.

Preferably, the system includes means, for determining an increased zone by increasing the predetermined zone by a predetermined factor should the predetermined zone not include an obstacle and means to determine whether or not an increased zone includes an obstacle. The predetermined zone may be increased by a predetermined factor until the increased zone includes an obstacle. Preferably, the system includes means, for subdividing the increased zone into reduced zones, should the increased zone include an obstacle and means to determine for each reduced zone whether or not that reduced zone includes an obstacle and means to select each reduced zone which includes an obstacle for further subdivision and further selection until the reduced zones become a predetermined minimum size.

Each predetermined zone may be defined by a spherical region having a predetermined radius and the spherical region may be centred around its respective possible waypoint. The reduced zones may be defined by reduced spherical regions having predetermined radii and each reduced spherical region may be centred around an intermediate point between possible waypoints and along the likely trajectory of the vehicle. The spherical region and reduced spherical regions may be reduced by reducing the radius of each spherical region. The radius of the spherical region and reduced spherical regions may be reduced by a factor of two.

The increased zones may be defined by increased spherical regions having predetermined radii and each increased spherical region may be centred around its respective possible waypoint. The spherical region and increased spherical regions may be increased by increasing the radius of each spherical region. The radius of the spherical region and the increased spherical regions may be increased by a factor of two.

The predetermined minimum size of the reduced zones may be substantially equal in volume to that of the vehicle. Alternatively, the predetermined minimum size of the reduced zones may be substantially equal in volume to that of the vehicle and an additional error margin. The additional error margin may be related to the detection error of the means to determine whether or not a zone around a waypoint includes an obstacle.

The means to determine whether or not a zone around a waypoint includes an obstacle may be a laser radar apparatus.

The waypoints may be substantially equally spaced along the likely trajectory of the vehicle at intervals substantially equal to the radius of a spherical region enclosing the vehicle. The possible waypoints may be substantially equally spaced along the likely trajectory of the vehicle at intervals substantially equal to the radius of a spherical region enclosing the vehicle and an additional error margin which may be related to the detection error of the means to determine whether or not a zone around a possible waypoint includes an obstacle.

The means to determine the likely trajectory of the vehicle may also determine whether the likely trajectory is straight or curved. The means to determine whether or not the likely trajectory of the vehicle is curved may be determined by the formula:

$$R_{Curve} = \frac{Min.\ Velocity^2}{Max.\ Acceleration}$$

where $R_{Curve}$ is the radius of the curved trajectory, Min. Velocity is the minimum determined velocity of the vehicle over a predetermined time period and Max. Acceleration is the maximum determined centripetal acceleration of the vehicle over a predetermined time period.

The predetermined interval between possible waypoints on a straight likely trajectory may be determined from the formula:

$$\Delta x = 2\sqrt{R^2 - y^2}$$

where $\Delta \chi$ is the interval between possible waypoints, R is the radius of the spherical region and y is the radius of the vehicle.

It should be noted that variables R and y of the above formula will be the same if the spherical region does not include an additional error margin.

The predetermined interval between possible waypoints on a curved likely trajectory may be determined from the formula:

$$\Delta x = 2 \cdot R_{Curve} \cdot \arccos\left[1 + \frac{y^2 - R^2}{2 \cdot R_{Curve} \cdot (R_{Curve} + y)}\right]$$

where $\Delta \chi$ is the interval between possible waypoints, R is the radius of the spherical region, $R_{Curve}$ is the radius of the curved trajectory and y is radius of the vehicle.

Again, it should be noted that variables R and y of the above formula will be the same if the spherical region does not include an additional error margin.

The vehicle may be an aircraft. For example, the aircraft may be a helicopter. Alternatively, the vehicle may be a road vehicle. For example, the road vehicle may be a car. As a further alternative the vehicle may be a marine vessel. For example, the marine vessel may be a ship.

Preferably, the system includes a display means for conveying an indication of at least one obstacle and the position of the obstacle relative to the vehicle.

According to a second aspect of the invention a method of detecting obstacles includes determining the likely trajectory of a vehicle, determining possible waypoints along the likely trajectory of the vehicle at predetermined intervals between possible waypoints, determining whether or not a predetermined zone around a possible waypoint includes an obstacle, should the predetermined zone include an obstacle, subdividing the predetermined zone into reduced zones which are intersected by the likely trajectory, determining for each reduced zone whether or not that reduced zone includes an obstacle, and selecting each reduced zone which includes an obstacle for further subdivision and further selection until the reduced zones become a predetermined minimum size.

The invention will now be described, by way of example only, with reference to the accompanying drawings, in which:

Figure 1 illustrates an outline of the components of a obstacle advisory system according to the present invention;

Figure 2 illustrates the calculation of waypoints for a vehicle following a straight trajectory;

Figure 3 illustrates the calculation of waypoints having an increased spacing for a vehicle following a straight trajectory;

Figure 4 illustrates the subdivision of a zone into smaller zones for further analysis of whether or not the zone includes an obstacle; and

Figure 5 illustrates the calculation of waypoints for a helicopter following a curved trajectory.

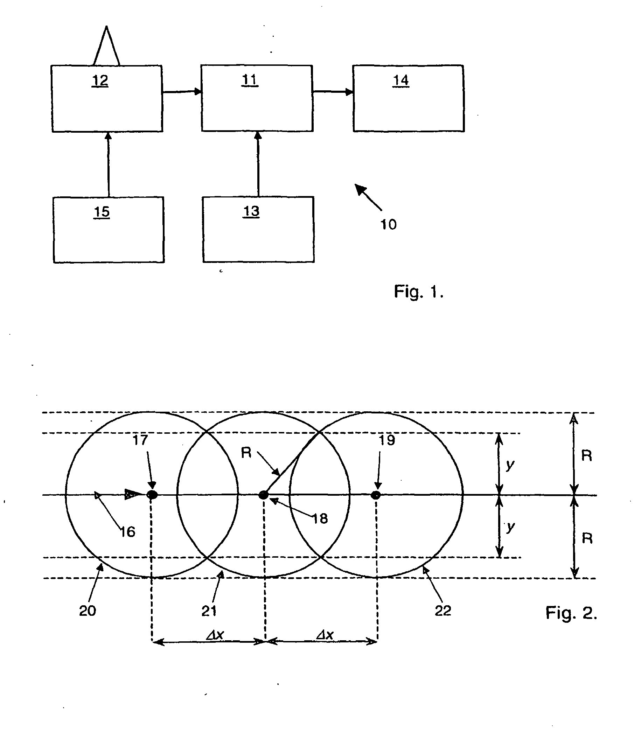

Referring to Figure 1, an obstacle advisory system 10 comprises processors 11 operably connected to a sensor 12, a navigational apparatus 13 and a display 14. In will be understood that the processor 11 receives inputs from the sensor 12 and the navigational apparatus 13, whilst it provides an output to the display 14 for viewing by an operator of a vehicle associated with the obstacle advisory system 10. The sensor 12 is operably connected to a sensor controller 15 which governs the operation of the sensor 12 so as to produce data corresponding to obstacles, not illustrated, in the direction of motion of the vehicle. The processor 11 analyses the data from the sensor 12 in accordance with a likely trajectory of the vehicle so as to determine whether or not an obstacle coincides with the likely trajectory of the vehicle. Information on possible collisions between the vehicle and an obstacle is indicated to the operator of the vehicle on the display 14 so that the operator may take avoiding action. The determining of the likely trajectory is made from information supplied by the navigation apparatus 13 to the processor 11 and the processor 11 determines possible collision of the vehicle with obstacles in the manner described below with reference to Figures 2 to 5. The likely trajectory of the vehicle is determined from the velocity of the vehicle relative to earth, the velocity of the vehicle relative to air and the acceleration and the angles describing the motion of the vehicle. This information is supplied by the navigation apparatus 13.

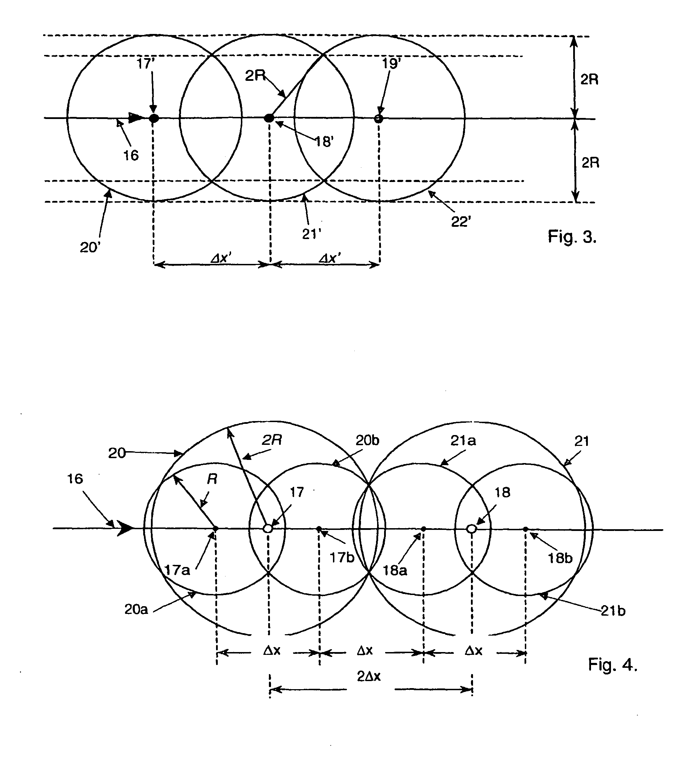

Referring to Figure 2, the obstacle advisory system 10 determines for a vehicle, not illustrated, the vehicle's likely trajectory 16 and possible waypoints 17, 18 and 19 at predetermined intervals $\Delta\chi$ along the likely trajectory 16. The predetermined intervals $\Delta\chi$ between possible waypoints 17, 18 and 19 are dependent on the velocity of the vehicle and whether or not the vehicle is likely to follow a straight trajectory as illustrated in Figure 2 or likely to follow a curved trajectory as illustrated in Figure 3. The system 10 firstly determines whether or not the likely trajectory 16 of the vehicle is straight or curved and dependent on this determination uses an associated equation to determine the distance $\Delta\chi$ between possible waypoints 17, 18 and 19 along the likely trajectory 16.

The system 10 uses information from the navigation apparatus in order to determine the likely trajectory 16 of the vehicle based on the previous movement of the vehicle and the current speed and heading of the vehicle so as to extrapolate a likely trajectory 16 for the vehicle for a predetermined distance forward with respect to the motion of the vehicle's present position.

The system 10 employs the following formula to determine whether or not the likely trajectory 16 of the vehicle is straight or curved:

$$R_{Curve} = \frac{Min.\ Velocity^2}{Max.\ Acceleration}$$

where $R_{Curve}$ is the radius of the curved trajectory. Min. Velocity is the minimum determined velocity of the vehicle over a predetermined time period and Max. Acceleration is the maximum determined centripetal acceleration of the vehicle over a predetermined time period. If the result of this formula tends to infinite then the likely trajectory 16 of the vehicle is straight, otherwise the likely trajectory 16 of the vehicle is curved.

If it is first assumed that the likely trajectory 16 has been determined to be straight, then referring to Figure 2 and using the following formula it is possible to determine the interval $\Delta\chi$ between each possible waypoint 17, 18 and 19 along the likely trajectory 16:

$$\Delta x \;\; = \;\; 2\sqrt{R^2 - y^2}$$

where $\Delta\chi$ is the interval between possible waypoints 17, 18 and 19, R is the radius of a spherical region 20, 21 or 22 around the vehicle and y is the radius of a notional minimum sphere that encloses the vehicle.

It will noted from Figure 2 that the spherical region 20, 21 or 22 has a larger radius R than the radius y of the vehicle, in this particular example the difference between R and y is given by the following formula:

$$R = y + 1 metre$$

The analysis of a conflict between the spherical region 20, 21 or 22 defined by R is used in place of the notional sphere defined by y so as to allow for measurement errors of the sensor 15 in determining whether or not a spherical region 20, 21 or 22 includes an obstacle. An example of a possible obstacle or obstruction could be a telephone wire or other type of cable suspended in the air between supports.

Once the possible waypoints 17, 18 and 19 have been determined, typically one thousand waypoints which approximates to twenty seconds of movement of the vehicle at the maximum speed of the vehicle along its likely trajectory 16, then analysis is undertaken by the processor 11 to determine whether or not a spherical region 20, 21 or 22 centred around its respective possible waypoint 17, 18 and 19 includes an obstacle. If the analysis concludes that the spherical region 20, 21 and 22 does not include a obstacle then the processor 11 can disregard the area enclosed by the spherical region 20, 21 or 22 from further analysis thereby saving processing time of the processor 11.

If a spherical region 20, 21 or 22 does not include an obstacle, then it is possible to increase the area of search, that is the volume enclosed by the spherical region 20, 21 or 22, by increasing the radius R by a predetermined factor, thereby defining new spherical regions 20', 21' or 22', as illustrated in Figure 3. In this example the radius R is increase by a factor of two. Therefore, if it is assumed that the likely trajectory 16 of the vehicle has been determined to be straight as previously described, then for the present example the formula used to determine the interval $\Delta\chi'$ between each possible waypoint 17', 18' and 19' along the likely trajectory 16 is now:

$$\Delta x' \;\; = \;\; 2\sqrt{2R^2 - y^2}$$

where $\Delta\chi'$ is the interval between possible waypoints 17', 18' and 19', R is the radius of a spherical region 20', 21' or 22' around the vehicle and y is the radius of a notional minimum sphere that encloses the vehicle.

Accordingly, the processor 11 determines new waypoints 17', 18' and 19' having a greater spacing $\Delta\chi'$ than previously described with reference to Figure 2 and the associated spherical regions 20', 21' and 22' enclose a greater volume around the waypoint 17', 18' and 19'. In this manner, should an initial spherical region 20, 21 or 22 not include an obstacle then the processor 11 can decide to use a larger spherical region 20', 21' or 22'. It will be understood that the spherical regions 20', 21' and 22' can be expanded by any suitable factor until a spherical region 20', 21' or 22' includes an obstacle.

Referring to Figure 4, should the spherical region 20 or 21 as described with reference to Figure 2 include an obstacle, the processor 11 subdivides the spherical region 20 or 21 into two smaller spherical regions 20a and 20b and 21a and 21b, each smaller spherical region 20a and 20b and 21a and 21b being centred on a newly calculated waypoint 17a and 17b and 18a and 18b and each of which intersect the likely trajectory 16 of the vehicle. Therefore, if it is assumed that the likely trajectory 16 of the vehicle has been determined to be straight as previously described, then for the present example the formula used to determine the interval $\Delta\chi''$ between each possible waypoint 17a, 17b, 18a and 18b along the likely trajectory 16 is:

$$\Delta x'' \quad = \quad 2\sqrt{\left[\frac{R}{2}\right]^2 - y^2}$$

where $\Delta x''$ is the interval between possible waypoints 17a, 17b, 18a and 18b, R is the radius of a spherical region 20a, 20b, 21a or 21b around the vehicle and y is the radius of a notional minimum sphere that encloses the vehicle. Accordingly, the processor 11 determines new waypoints 17a, 17b, 18a and 18b having a reduced spacing $\Delta x''$ than previously described with reference to Figure 2 and the associated spherical regions 20a, 20b, 21a and 21b enclose a smaller volume around its respective waypoint 17a, 17b, 18a and 18b. In this manner, should an initial spherical region 20, 21 or 22 include an obstacle then the processor 11 can decide to use a smaller spherical region 20a, 20b, 21a or 21 b. It will be understood that the spherical regions 20a, 20b, 21a or 21 b can be reduced by any suitable factor until the radii of the spherical regions 20a, 20b, 21a or 21b become substantially equal to the radius y of a notional minimum sphere that encloses the vehicle.

In this manner, only those spherical regions which initially include an obstacle are further examined by dividing the spherical region into reduced spherical regions and again determining for each reduced spherical region whether or not that region still includes an obstacle. Those spherical regions that do not include an obstacle are no longer considered candidates for further division and selection. Accordingly, processing time for the system 10 is reduced by focusing on only those spherical regions that include an obstacle.

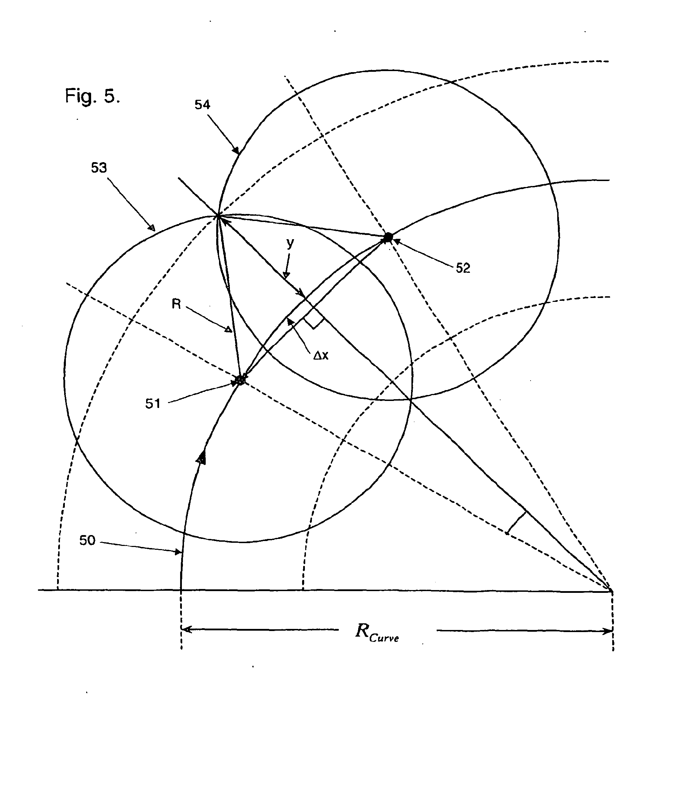

Previously in the description with reference to Figures 2 to 4 it has been assumed that the likely trajectory of the vehicle will follow a straight line, but it is possible that the processor may determine that the likely trajectory will follow a curved path. Referring to Figure 5, the obstacle advisory system 10 determines for a vehicle, not illustrated, the vehicles likely trajectory 50 and possible waypoints 51 and 52 at predetermined intervals $\Delta x$ along the likely trajectory 50. The predetermined intervals $\Delta x$ between possible waypoints 51 and 52 are dependent on the velocity of the vehicle and whether or not the vehicle is likely to follow a straight or curved trajectory. The system 10 uses information from the navigation apparatus 13 in order to determine the likely trajectory 50 of the vehicle based on the previous movement of the vehicle and the current speed and heading of the vehicle so as to extrapolate a likely trajectory 50 for the vehicle for a predetermined distance forward with respect to the motion of the vehicles present position.

Should the processor 11 predict that the vehicle is likely to follow a curved trajectory then referring to Figure 5 and using the following formula it is possible to determine the interval $\Delta x$ between each possible waypoint:

$$\Delta x \quad = \quad 2 \cdot R_{Curve} \cdot \arccos\left[1 \quad + \quad \frac{y^2 - R^2}{2 \cdot R_{Curve} \cdot (R_{Curve} + y)}\right]$$

where $\Delta x$ is the interval between possible waypoints, R is the radius of the spherical region, $R_{Curve}$ is the radius of the curved trajectory and y is the radius of a notional minimum sphere that encloses the vehicle.

The determination as to whether or not the an obstacle is included in a spherical region 53 or 54 and whether or not to reduce or increase the distance $\Delta x$ between possible waypoints 51 or 52 and correspondingly reduce or increase the volume of the spherical region 53 or 54 is completed as previously described with reference to Figures 2 to 4.

## Claims

1. An obstacle advisory system (10) for a vehicle, comprising
   means (13) for determining the likely trajectory (16) of the vehicle,
   means (13) for determining possible waypoints (17;18;19) along the likely trajectory (16) of the vehicle at predetermined intervals between possible waypoints, and
   means (11) for determining whether or not a predetermined zone (20;21;22) around a possible waypoint (17;18;19) includes an obstacle,
   **characterized in that** it further comprises
   means (11) for subdividing the predetermined zone (20;21) into reduced zones (20a;20b;21a;21b) which are intersected by the likely trajectory (16) should the predetermined zone (20;21) include an obstacle,
   means (11) for determining for each reduced zone (20a,20b;21a,21b) whether or not that reduced zone includes an obstacle, and

means (11), for selecting each reduced zone which includes an obstacle for further subdivision and further selection until the reduced zones become a predetermined minimum size.

2. An obstacle advisory system, as in Claim 1, including means (11) for determining an increased zone (20';21';22') by increasing the predetermined zone (20;21;22) by a predetermined factor should the predetermined zone not include an obstacle, and means for determining whether or not an increased zone (20';21';22';) includes an obstacle.

3. An obstacle advisory system, as in Claim 2, wherein the predetermined zone (20;21;22) is increased by a predetermined factor until the increased zone includes an obstacle.

4. An obstacle advisory system, as in Claim 3, including means (11) for subdividing the increased zone (20';21') into reduced zones (20a;20b;21a,21b), should the increased zone include an obstacle, and means for determining for each reduced zone whether or not that reduced zone includes an obstacle and means for selecting each reduced zone which includes an obstacle for further subdivision and further selection until the reduced zones become a predetermined minimum size.

5. An obstacle advisory system, as in any preceding claim, wherein each predetermined zone is defined by a spherical region (20;21;22) having a predetermined radius (2R) and the spherical region (20;21;22) is centred around its respective possible waypoint (17;18;19).

6. An obstacle advisory system, as in any preceding claim, wherein the reduced zones are defined by reduced spherical regions (20a,20b;21a,21b) having predetermined radii (R) and each reduced spherical region is centred around an intermediate point (17a,17b;18a,18b) between possible waypoints (17;18) and along the likely trajectory (16) of the vehicle.

7. An obstacle advisory system, as in Claim 6, wherein the spherical region (20;21;22) and reduced spherical regions (20a,20b;21a,21b) are reduced by reducing the radius (2R) of each spherical region (20;21;22).

8. An obstacle advisory system, as in Claim 7, wherein the radius (2R) of the spherical region (20;21;22) and reduced spherical regions (20a,20b;21a,21b) are reduced by a factor of two.

9. An obstacle advisory system, as in Claims 2 to 8, wherein the increased zones are defined by increased spherical regions (20';21';22') having predetermined radii (2R) and each increased spherical region (20';21';22') are centred around its respective possible waypoint (17';18';19')

10. An obstacle advisory system, as in Claims 5 to 9, wherein the spherical region (20;21;22) and increased spherical regions (20';21';22') are increased by increasing the radius (2R) of each spherical region (20;21;22).

11. An obstacle advisory system, as in Claim 10, wherein the radius of the spherical region (20;21;22) and the increased spherical regions (20';21';22') are increased by a factor of two.

12. An obstacle advisory system, as in any preceding claim, wherein the predetermined minimum size of the reduced zones (20a,20b;21a,21b) are substantially equal in volume to that of the vehicle.

13. An obstacle advisory system, as in Claims 1 to 11, wherein the predetermined minimum size of the reduced zones (20a,20b;21a;21b) are substantially equal in volume to that of the vehicle and an additional error margin.

14. An obstacle advisory system, as in Claim 13, wherein the additional error margin is related to the detection error of the means for determining whether or not a zone (20;21;22) around a waypoint (17;18;19) includes an obstacle.

15. An obstacle advisory system, as in any preceding claim, wherein the means for determining whether or not a zone (20;21;22) around a waypoint (17;18;19) includes an obstacle is a laser radar apparatus.

16. An obstacle advisory system, as in any preceding claim, wherein waypoints (17;18;19) are substantially equally spaced along the likely trajectory (16) of the vehicle at intervals substantially equal to the radius (2R) of a spherical region (20;21;22) enclosing the vehicle.

17. An obstacle advisory system, as in Claims 1 to 16, wherein possible waypoints (17;18;19) are substantially equally spaced along the likely trajectory (16) of the vehicle at intervals substantially equal to the radius (2R) of a spherical region (20;21;22) enclosing the vehicle and an additional error margin which is related to the detection error of the means for determining whether or not a zone (20;21;22) around a possible waypoint (17;18;19) includes an obstacle.

18. An obstacle advisory system, as in any preceding claim, wherein the means (15) for determining the likely trajectory (16) of the vehicle are also adapted to determine whether the likely trajectory (16) is straight or curved.

19. An obstacle advisory system, as in Claim 18, wherein the means (13) for determining whether or not the likely trajectory (16) of the vehicle is curved is determined by the formula:

$$R_{Curve} = \frac{Min.\ Velocity^2}{Max.\ Acceleration}\ ,$$

where $R_{Curve}$ is the radius of the curved trajectory, Min. Velocity is the minimum determined velocity of the vehicle over a predetermined time period and Max. Acceleration is the maximum determined centripetal acceleration of the vehicle over a predetermined time period.

20. An obstacle advisory system, as in Claim 5 to 19, wherein the predetermined interval between possible waypoints (17; 18; 19) on a straight likely trajectory (16) is determined from the formula:

$$\Delta x \;=\; 2\sqrt{R^2 - y^2}\ ,$$

where $\Delta\chi$ is the interval between possible waypoints (17; 18; 19), R is the radius of the spherical region (20; 21; 22) and y is the radius of the vehicle.

21. An obstacle advisory system, as in Claims 5 to 19, wherein the predetermined interval between possible waypoints (17; 18; 19) on a curved likely trajectory (16) is determined from the formula:

$$\Delta x \;=\; 2 \cdot R_{Curve} \cdot \arccos\left[ 1 \;+\; \frac{y^2 - R^2}{2 \cdot R_{Curve} \cdot (R_{Curve} + y)} \right],$$

where $\Delta\chi$ is the interval between possible waypoints (17; 18; 19), R is the radius of the spherical region (20; 21; 22), $R_{Curve}$ is the radius of the curved trajectory (16) and y is radius of the vehicle.

22. An obstacle advisory system, as in any preceding claim, wherein the vehicle is an aircraft.

23. An obstacle advisory system, as in any preceding claim, wherein the vehicle is a road vehicle.

24. An obstacle advisory system, as in any preceding claim, wherein the vehicle is a marine vessel.

25. An obstacle advisory system, as in any preceding claim, including a display means for conveying an indication of at least one obstacle and the position of the obstacle relative to the vehicle.

26. A method of detecting obstacles, including
determining the likely trajectory (16) of a vehicle,
determining possible waypoints (17;18;19) along the likely trajectory (16) of the vehicle at predetermined intervals between possible waypoints (17;18;19), and
determining whether or not a predetermined zone (20;21;22) around a possible waypoint (17;18;19) includes an obstacle, **characterized in that** it further includes.

should the predetermined zone (20;21) include an obstacle, subdividing the predetermined zone (20;21) into reduced zone (20a,20b;21a,21b) which are intersected by the likely trajectory (16),
determining for each reduced zone (20a,20b;21a,21b) whether or not that reduced zone includes an obstacle, and selecting each reduced zone which includes an obstacle for further subdivision and further selection until the reduced zones become a predetermined minimum size.

**Patentansprüche**

1.  Hindernis-Warnsystem (10) für ein Fahrzeug, umfassend:

    Mittel (13) zum Bestimmen der wahrscheinlichen Trajektorie (16) des Fahrzeugs,
    Mittel (13) zum Bestimmen möglicher Wegpunkte (17; 18; 19) entlang der wahrscheinlichen Trajektorie (16) des Fahrzeugs bei vorbestimmten Intervallen zwischen möglichen Wegpunkten, und
    Mittel (11) zum Bestimmen, ob ein vorbestimmter Bereich (20; 21; 22) um einen möglichen Wegpunkt (17; 18; 19) herum ein Hindernis umfasst, oder nicht,
    **dadurch gekennzeichnet, dass** es weiterhin umfasst:

    Mittel (11) zum Unterteilen des vorbestimmten Bereichs (20; 21) in reduzierte Bereiche (20a, 20b; 21 a, 21 b), welche durch die wahrscheinliche Trajektorie (16) geschnitten werden, sollte der vorbestimmte Bereich (20; 21) ein Hindernis umfassen,
    Mittel (11) zum Bestimmen für jeden reduzierten Bereich (20a, 20b; 21 a, 21 b), ob dieser reduzierte Bereich ein Hindernis umfasst oder nicht, und
    Mittel (11) zum Auswählen jedes reduzieren Bereichs, der ein Hindernis umfasst, zur weiteren Unterteilung und weiteren Auswahl, bis die reduzierten Bereiche eine vorbestimmte Minimalgröße erreichen.

2.  Hindernis-Warnsystem nach Anspruch 1,
    umfassend Mittel (11) zum Bestimmen eines vergrößerten Bereichs (20'; 21'; 22') durch Vergrößern des vorbestimmten Bereichs (20; 21; 22) um einen vorbestimmten Faktor, sollte der vorbestimmte Bereich kein Hindernis umfassen, und Mittel zum Bestimmen, ob ein vergrößerter Bereich (20'; 21'; 22') ein Hindernis umfasst, oder nicht.

3.  Hindernis-Warnsystem nach Anspruch 2,
    wobei der vorbestimmte Bereich (20; 21; 22) um einen vorbestimmten Faktor vergrößert wird, bis der vergrößerte Bereich ein Hindernis umfasst.

4.  Hindernis-Warnsystem nach Anspruch 3,
    umfassend Mittel (11) zum Unterteilen des vergrößerten Bereichs (20'; 21') in reduzierte Bereiche (20a, 20b; 21 a, 21 b), sollte der vergrößerte Bereich ein Hindernis umfassen, und Mittel zum Bestimmen für jeden reduzierten Bereich, ob dieser reduzierte Bereich ein Hindernis umfasst oder nicht, und Mittel zum Auswählen jedes reduzierten Bereichs, der ein Hindernis umfasst, zur weiteren Unterteilung und weiteren Auswahl, bis die reduzierten Bereiche eine vorbestimmte Minimalgröße erreichen.

5.  Hindernis-Warnsystem nach einem der vorhergehenden Ansprüche,
    wobei jeder vorbestimmte Bereich durch eine sphärische Region (20; 21; 22) definiert ist, die einen vorbestimmten Radius (2R) aufweist, und die sphärische Region (20; 21; 22) um ihren jeweiligen möglichen Wegpunkt (17; 18; 19) herum zentriert ist.

6.  Hindernis-Warnsystem nach einem der vorhergehenden Ansprüche,
    wobei die reduzierten Bereiche durch reduzierte sphärische Regionen (20a, 20b; 21 a, 21 b) definiert sind, die vorbestimmte Radien (R) aufweisen, und jede reduzierte sphärische Region um einen Zwischen-Punkt (17a, 17b; 18a, 18b) zwischen möglichen Wegpunkten (17; 18) herum und entlang der möglichen Trajektorie (16) des Fahrzeugs zentriert ist.

7.  Hindernis-Warnsystem nach Anspruch 6,
    wobei die sphärische Region (20; 21; 22) und reduzierte sphärische Regionen (20a, 20b; 21 a, 21 b) durch Reduzieren des Radius (2R) jeder sphärischen Region (20; 21; 22) reduziert werden.

8.  Hindernis-Warnsystem nach Anspruch 7,

wobei der Radius (2R) der sphärische Region (20; 21; 22) und reduzierter sphärischer Regionen (20a, 20b; 21 a, 21 b) um einen Faktor von zwei reduziert
werden.

**9.** Hindernis-Warnsystem nach Ansprüchen 2 bis 8,
wobei die vergrößerten Bereiche definiert sind durch vergrößerte sphärische Regionen (20'; 21'; 22'), die vorbestimmte Radien (2R) aufweisen, und wobei jede vergrößerte sphärische Region (20'; 21'; 22') um ihren jeweiligen möglichen Wegpunkt (17', 18', 19') herum zentriert sind.

**10.** Hindernis-Warnsystem nach Ansprüchen 5 bis 9,
wobei die sphärische Region (20; 21; 22) und vergrößerte sphärische Regionen (20'; 21'; 22') durch Vergrößern des Radius (2R) jeder sphärischen Region (20; 21; 22) vergrößert werden.

**11.** Hindernis-Warnsystem nach Anspruch 10, wobei der Radius der sphärischen Region (20; 21; 22) und der vergrößerten sphärischen Regionen (20'; 21'; 22') um einen Faktor von zwei vergrößert werden.

**12.** Hindernis-Warnsystem nach einem der vorhergehenden Ansprüche,
wobei die vorbestimmte Minimalgröße der reduzierten Bereiche (20a, 20b; 21 a, 21 b) im Wesentlichen gleich an Volumen zu der des Fahrzeugs sind.

**13.** Hindernis-Warnsystem nach Ansprüchen 1 bis 11,
wobei die vorbestimmte Minimalgröße der reduzierten Bereiche (20a, 20b; 21 a, 21 b) im Wesentlichen gleich an Volumen zu der des Fahrzeugs und einer zusätzlichen Fehlerspanne sind.

**14.** Hindernis-Warnsystem nach Anspruch 13,
wobei die zusätzliche Fehlerspanne in Beziehung steht zu dem Erfassungsfehler des Mittels zum Bestimmen, ob ein Bereich (20; 21; 22) um einen Wegpunkt (17; 18; 19) herum ein Hindernis umfasst, oder nicht.

**15.** Hindernis-Warnsystem nach einem der vorhergehenden Ansprüche,
wobei das Mittel zum Bestimmen, ob ein Bereich (20; 21; 22) um einen Wegpunkt (17; 18; 19) herum ein Hindernis umfasst, oder nicht, eine Laser-Radar-Vorrichtung ist.

**16.** Hindernis-Warnsystem nach einem der vorhergehenden Ansprüche,
wobei Wegpunkte (17; 18; 19) im Wesentlichen gleich entlang der wahrscheinlichen Trajektorie (16) des Fahrzeugs beabstandet sind, mit Intervallen, die im Wesentlichen gleich zu dem Radius (2R) einer sphärischen Region (20; 21; 22) sind, welche das Fahrzeug umschließt.

**17.** Hindernis-Warnsystem nach Ansprüchen 1 bis 16, wobei mögliche Wegpunkte (17; 18; 19) im Wesentlichen gleich entlang der wahrscheinlichen Trajektorie (16) des Fahrzeugs beabstandet sind mit Intervallen, die im Wesentlichen gleich dem Radius (2R) einer das Fahrzeug umschließenden, sphärischen Region (20; 21; 22) und einer zusätzlichen Fehlerspanne sind, welche in Beziehung steht zu dem Erfassungsfehler des Mittels zum Bestimmen, ob ein Bereich (20; 21; 22) um einen möglichen Wegpunkt (17; 18; 19) herum ein Hindernis umfasst, oder nicht.

**18.** Hindernis-Warnsystem nach einem der vorhergehenden Ansprüche, wobei das Mittel (13) zum Bestimmen der wahrscheinlichen Trajektorie (16) des Fahrzeugs auch dazu ausgebildet ist, zu bestimmen, ob die wahrscheinliche Trajektorie (16) geradlinig oder gekrümmt ist.

**19.** Hindernis-Warnsystem nach Anspruch 18, wobei das Mittel (13) zum Bestimmen, ob die wahrscheinliche Trajektorie (16) des Fahrzeugs gekrümmt ist, oder nicht, durch die Formel:

$$R_{curve} = \frac{Min.Velocity^2}{Max.Acceleration}$$

bestimmt ist, wobei $R_{curve}$ der Radius der gekrümmten Trajektorie ist,
Min.Velocity die minimale bestimmte Geschwindigkeit des Fahrzeugs über eine vorbestimmte Zeitdauer ist und Max.Acceleration die maximale bestimmte Zentripetalschleunigung des Fahrzeugs über eine vorbestimmte Zeitdauer ist.

**20.** Hindernis-Warnsystem nach Ansprüchen 5 bis 19, wobei das vorbestimmte Intervall zwischen möglichen Wegpunkten (17; 18; 19) auf einer geradlinigen wahrscheinlichen Trajektorie (16) durch die Formel

$$\Delta x = 2\sqrt{R^2 - y^2}$$

bestimmt, ist, wobei Dx das Intervall zwischen möglichen Wegpunkten (17; 18; 19) ist, R der Radius der sphärischen Region (20; 21; 22) ist und y der Radius des Fahrzeugs ist.

**21.** Hindernis-Warnsystem nach Ansprüchen 5 bis 19,
wobei das vorbestimmte Intervall zwischen möglichen Wegpunkten (17; 18; 19) auf einer gekrümmten wahrscheinlichen Trajektorie (16) durch die Formel

$$\Delta x = 2 \cdot R_{curve} \cdot \arccos\left[ 1 + \frac{y^2 - R^2}{2 \cdot R_{curve} \cdot (R_{curve} + y)} \right]$$

bestimmt ist, wobei Dx das Intervall zwischen möglichen Wegpunkten (17; 18; 19) ist, $R_{curve}$ der Radius der sphärischen Region (20; 21; 22) ist, R der Radius
der gekrümmten Trajektorie (16) ist, und y der Radius des Fahrzeugs ist.

**22.** Hindernis-Warnsystem gemäß einem der vorhergehenden Ansprüche,
wobei das Fahrzeug ein Flugzeug ist.

**23.** Hindernis-Warnsystem gemäß einem der vorhergehenden Ansprüche,
wobei das Fahrzeug ein Straßenfahrzeug ist.

**24.** Hindernis-Warnsystem gemäß einem der vorhergehenden Ansprüche,
wobei das Fahrzeug ein Seefahrzeug ist.

**25.** Hindernis-Warnsystem nach einem der vorhergehenden Ansprüche, umfassend ein Anzeigemittel zum Übermitteln einer Angabe von wenigstens einem
Hindernis und der Position des Hindernisses relativ zum Fahrzeug.

**26.** Verfahren zum Erfassen von Hindernissen, umfassend
Bestimmen der wahrscheinlichen Trajektorie (16) eines Fahrzeugs, Bestimmen möglicher Wegpunkte (17; 18; 19) entlang der wahrscheinlichen
Trajektorie (16) des Fahrzeugs bei vorbestimmten Intervallen zwischen möglichen Wegpunkten (17; 18; 19), und Bestimmen, ob ein vorbestimmter Bereich (20; 21; 22) um einen möglichen Wegpunkt (17; 18; 19) herum ein Hindernis umfasst, oder nicht,
**dadurch gekennzeichnet, dass** es weiter umfasst:

sollte der vorbestimmte Bereich (20; 21) ein Hindernis umfassen, Unterteilen des vorbestimmten Bereichs (20; 21) in reduzierte Bereiche (20a, 20b; 21 a, 21 b), die von der wahrscheinlichen Trajektorie (16) geschnitten werden, Bestimmen für jeden reduzierten Bereich (20a, 20b; 21 a, 21 b), ob dieser reduzierte Bereich ein Hindernis umfasst, oder nicht, und
Auswählen jedes reduzierten Bereichs, der ein Hindernis umfasst, zur weiteren Unterteilung und weiteren Auswahl, bis die reduzierten Bereiche eine vorbestimmte Minimalgröße erreichen.

**Revendications**

**1.** Système d'avertissement d'obstacle (10) pour un véhicule, comprenant :

des moyens (13) pour déterminer la trajectoire probable (16) du véhicule,

des moyens (13) pour déterminer des points de cheminement possibles (17 ; 18 ; 19) le long de la trajectoire probable (16) du véhicule à des intervalles prédéterminés entre les points de cheminement possibles, et

des moyens (11) pour déterminer si, oui ou non, une zone prédéterminée (20 ; 21 ; 22) autour d'un point de cheminement possible (17 ; 18 ; 19) comprend un obstacle,

**caractérisé en ce qu'**il comprend en outre :

des moyens (11) pour subdiviser la zone prédéterminée (20 ; 21) en des zones réduites (20a, 20b ; 21 a, 21 b) qui sont croisées par la trajectoire probable (16) si la zone prédéterminée (20 ; 21) comprend un obstacle,

des moyens (11) pour déterminer, pour chaque zone réduite (20a, 20b ; 21a, 21 b), si, oui ou non, cette zone réduite comprend un obstacle, et

des moyens (11) pour sélectionner chaque zone réduite qui comprend un obstacle pour une subdivision supplémentaire et une sélection supplémentaire jusqu'à ce que les zones réduites atteignent une taille minimum prédéterminée.

2. Système d'avertissement d'obstacle, selon la revendication 1, comprenant des moyens (11) pour déterminer une zone agrandie (20' ; 21' ; 22') en agrandissant la zone prédéterminée (20 ; 21 ; 22) d'un facteur prédéterminé, si la zone prédéterminée ne comprend pas d'obstacle, et des moyens pour déterminer si, oui ou non, une zone agrandie (20' ; 21' ; 22') comprend un obstacle.

3. Système d'avertissement d'obstacle, selon la revendication 2, dans lequel la zone prédéterminée (20 ; 21 ; 22) est agrandie d'un facteur prédéterminé jusqu'à ce que la zone agrandie comprenne un obstacle.

4. Système d'avertissement d'obstacle, selon la revendication 3, comprenant des moyens (11) pour subdiviser la zone agrandie (20' ; 21') en des zones réduites (20a, 20b ; 21 a, 21 b), si la zone agrandie comprend un obstacle, et des moyens pour déterminer, pour chaque zone réduite, si, oui ou non, cette zone réduite comprend un obstacle et des moyens pour sélectionner chaque zone réduite qui comprend un obstacle pour une subdivision supplémentaire et une sélection supplémentaire jusqu'à ce que les zones réduites atteignent une taille minimum prédéterminée.

5. Système d'avertissement d'obstacle, selon l'une quelconque des revendications précédentes, dans lequel chaque zone prédéterminée est définie par une région sphérique (20 ; 21 ; 22) ayant un rayon (2R) prédéterminé et la région sphérique (20 ; 21 ; 22) est centrée autour de son point de cheminement possible (17 ; 18 ; 19) respectif.

6. Système d'avertissement d'obstacle, selon l'une quelconque des revendications précédentes, dans lequel les zones réduites sont définies par des régions sphériques réduites (20a, 20b ; 21a, 21b) ayant des rayons (R) prédéterminés et chaque région sphérique réduite est centrée autour d'un point intermédiaire (17a, 17b ; 18a, 18b) entre des points de cheminement possibles (17 ; 18) et le long de la trajectoire probable (16) du véhicule.

7. Système d'avertissement d'obstacle, selon la revendication 6, dans lequel la région sphérique (20 ; 21 ; 22) et les régions sphériques réduites (20a, 20b ; 21a, 21b) sont réduites en réduisant le rayon (2R) de chaque région sphérique (20 ; 21 ; 22).

8. Système d'avertissement d'obstacle, selon la revendication 7, dans lequel le rayon (2R) de la région sphérique (20 ; 21 ; 22) et les régions sphériques réduites (20a, 20b ; 21 a, 21 b) sont réduits d'un facteur deux.

9. Système d'avertissement d'obstacle, selon les revendications 2 à 8, dans lequel les zones agrandies sont définies par des régions sphériques agrandies (20' ; 21' ; 22') ayant des rayons (2R) prédéterminés et chaque région sphérique agrandie (20' ; 21' ; 22') est centrée autour de son point de cheminement possible (17' ; 18' ; 19') respectif.

10. Système d'avertissement d'obstacle, selon les revendications 5 à 9, dans lequel la région sphérique (20 ; 21 ; 22) et les régions sphériques agrandies (20' ; 21' ; 22') sont agrandies en augmentant le rayon (2R) de chaque région sphérique (20 ; 21 ; 22).

11. Système d'avertissement d'obstacle, selon la revendication 10, dans lequel le rayon de la région sphérique (20 ; 21 ; 22) et les régions sphériques agrandies (20' ; 21' ; 22') sont augmentés d'un facteur deux.

12. Système d'avertissement d'obstacle, selon l'une quelconque des revendications précédentes, dans lequel les tailles minimums prédéterminées des zones réduites (20a, 20b ; 21 a, 21 b) sont sensiblement égales en volume à celle du véhicule.

**13.** Système d'avertissement d'obstacle, selon les revendications 1 à 11, dans lequel les tailles minimums prédéterminées des zones réduites (20a, 20b ; 21 a, 21 b) sont sensiblement égales en volume à celle du véhicule plus une marge d'erreur supplémentaire.

**14.** Système d'avertissement d'obstacle, selon la revendication 13, dans lequel la marge d'erreur supplémentaire est liée à l'erreur de détection des moyens pour déterminer si, oui ou non, une zone (20 ; 21 ; 22) autour d'un point de cheminement (17 ; 18 ; 19) comprend un obstacle.

**15.** Système d'avertissement d'obstacle, selon l'une quelconque des revendications précédentes, dans lequel les moyens pour déterminer si, oui ou non, une zone (20 ; 21 ; 22) autour d'un point de cheminement (17 ; 18 ; 19) comprend un obstacle sont un dispositif de radar laser.

**16.** Système d'avertissement d'obstacle, selon l'une quelconque des revendications précédentes, dans lequel les points de cheminement (17 ; 18 ; 19) sont sensiblement également espacés le long de la trajectoire probable (16) du véhicule à des intervalles sensiblement égaux au rayon (2R) d'une région sphérique (20 ; 21 ; 22) entourant le véhicule.

**17.** Système d'avertissement d'obstacle, selon les revendications 1 à 16, dans lequel les points de cheminement possibles (17 ; 18 ; 19) sont sensiblement également espacés le long de la trajectoire probable (16) du véhicule à des intervalles sensiblement égaux au rayon (2R) d'une région sphérique (20 ; 21 ; 22) entourant le véhicule plus une margeur d'erreur supplémentaire qui est liée à l'erreur de détection des moyens pour déterminer si, oui ou non, une zone (20 ; 21 ; 22) autour d'un point de cheminement possible (17 ; 18 ; 19) comprend un obstacle.

**18.** Système d'avertissement d'obstacle, selon l'une quelconque des revendications précédentes, dans lequel les moyens (13) pour déterminer la trajectoire probable (16) du véhicule sont également adaptés pour déterminer si la trajectoire probable (16) est droite ou incurvée.

**19.** Système d'avertissement d'obstacle, selon la revendication 18, dans lequel les moyens (13) pour déterminer si, oui ou non, la trajectoire probable (16) du véhicule est incurvée sont déterminés par une valeur non nulle à partir de la formule :

$$\mathbf{R_{curve}} = \frac{\textit{Vitesse } \text{min.}^2}{\textit{Accélération } \text{max.}}$$

où $R_{Curve}$ est le rayon de la trajectoire incurvée, vitesse min. est la vitesse minimum déterminée du véhicule sur une période de temps prédéterminée et accélération max. est l'accélération centripète maximum déterminée du véhicule sur une période de temps prédéterminée.

**20.** Système d'avertissement d'obstacle, selon les revendications 5 à 19, dans lequel l'intervalle prédéterminé entre des points de cheminement possibles (17 ; 18 ; 19) sur une trajectoire probable (16) droite est déterminé à partir de la formule :

$$\Delta \chi = 2 \sqrt{R^2 - y^2}$$

où $\Delta\chi$ est l'intervalle entre des points de cheminement possibles (17 ; 18 ; 19), R est le rayon de la région sphérique (20 ; 21 ; 22) et y est le rayon du véhicule.

**21.** Système d'avertissement d'obstacle, selon les revendications 5 à 19, dans lequel l'intervalle prédéterminé entre des points de cheminement possibles (17 ; 18 ; 19) sur une trajectoire probable (16) incurvée est déterminé à partir de la formule :

$$\Delta \chi = 2 . R_{Curve} . \arccos\left[1 + \frac{y^2 - R^2}{2 . R_{Curve} . (R_{Curve} + y)}\right]$$

où $\Delta\chi$ est l'intervalle entre des points de cheminement possibles (17 ; 18 ; 19), R est le rayon de la région sphérique (20 ; 21 ; 22), $R_{Curve}$ est le rayon de la trajectoire (16) incurvée et y est le rayon du véhicule.

22. Système d'avertissement d'obstacle, selon l'une quelconque des revendications précédentes, dans lequel le véhicule est un avion.

23. Système d'avertissement d'obstacle, selon l'une quelconque des revendications précédentes, dans lequel le véhicule est un véhicule routier.

24. Système d'avertissement d'obstacle, selon l'une quelconque des revendications précédentes, dans lequel le véhicule est un navire.

25. Système d'avertissement d'obstacle, selon l'une quelconque des revendications précédentes, comprenant des moyens d'affichage pour communiquer une indication d'au moins un obstacle et de la position de l'obstacle par rapport au véhicule.

26. Procédé de détection d'obstacle, comprenant les étapes consistant à :

déterminer la trajectoire probable (16) d'un véhicule,
déterminer des points de cheminement possibles (17 ; 18 ; 19) le long de la trajectoire probable (16) du véhicule à des intervalles prédéterminés entre les points de cheminement possibles (17 ; 18 ; 19), et
déterminer si, oui ou non, une zone prédéterminée (20 ; 21 ; 22) autour d'un point de cheminement possible (17 ; 18 ; 19) comprend un obstacle,
**caractérisé en ce qu'**il comprend en outre les étapes consistant à :

si la zone prédéterminée (20 ; 21) comprend un obstacle, subdiviser la zone prédéterminée (20 ; 21) en des zones réduites (20a, 20b ; 21a, 21 b) qui sont croisées par la trajectoire probable (16),
déterminer pour chaque zone réduite (20a, 20b ; 21a, 21 b) si, oui ou non, cette zone réduite comprend un obstacle, et
sélectionner chaque zone réduite qui comprend un obstacle pour une subdivision supplémentaire et une sélection supplémentaire jusqu'à ce que les zones réduites atteignent une taille minimum prédéterminée.

Fig. 1.

Fig. 2.

Fig. 3.

Fig. 4.

Fig. 5.

**EP 1 265 078 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5740047 A
- US 5375059 A